(19) Europäisches Patentamt / European Patent Office / Office européen des brevets

(11) **EP 2 353 272 B1**

(12) **FASCICULE DE BREVET EUROPEEN**

(45) Date de publication et mention
de la délivrance du brevet:
**04.06.2014 Bulletin 2014/23**

(21) Numéro de dépôt: **09753148.7**

(22) Date de dépôt: **28.09.2009**

(51) Int Cl.:
*H04L 29/06* (2006.01)          *G06F 21/55* (2013.01)
*H04L 12/26* (2006.01)

(86) Numéro de dépôt international:
**PCT/FR2009/051831**

(87) Numéro de publication internationale:
**WO 2010/037955 (08.04.2010 Gazette 2010/14)**

(54) **PROCEDE DE CARACTERISATION D'ENTITES A L'ORIGINE DE VARIATIONS DANS UN TRAFIC RESEAU**

VERFAHREN ZUR CHARAKTERISIERUNG VON ENTITÄTEN AM URSPRUNG VON FLUKTUATIONEN IN EINEM NETZWERKVERKEHR

METHOD FOR CHARACTERISING ENTITIES AT THE ORIGIN OF FLUCTUATIONS IN A NETWORK TRAFFIC

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.09.2008 FR 0856580**

(43) Date de publication de la demande:
**10.08.2011 Bulletin 2011/32**

(73) Titulaire: **Orange**
**75015 Paris (FR)**

(72) Inventeurs:
• **VEYSSET, Franck**
**F-92130 Issy Les Moulineaux (FR)**
• **ANSEL, Pierre**
**F-92120 Montrouge (FR)**

(56) Documents cités:
**US-A1- 2002 032 717      US-A1- 2004 221 190**

• KIM, HELMY: "Attacker Traceback with Cross-layer Monitoring in Wireless Multi-hop Networks" ACM, 2 PENN PLAZA, SUITE 701 - NEW YORK USA, 30 octobre 2006 (2006-10-30), pages 123-134, XP040050966
• PENG, LECKIE, RAMAMOHANARAO: "Survey of Network-Based Defense Mechanisms Countering the DoS and DDoS Problems" ACM, 2 PENN PLAZA, SUITE 701 - NEW YORK USA, avril 2007 (2007-04), pages 1-42, XP040055460

**Description**

La présente invention concerne un procédé de caractérisation d'entités à l'origine d'au moins une variation dans un trafic réseau.

L'invention se situe dans le domaine des réseaux de télécommunications. Elle trouve une application particulièrement intéressante dans la sécurisation d'un réseau informatique, et notamment dans l'identification d'un ensemble de machines compromises, contrôlées par un même utilisateur malveillant (le terme couramment utilisé pour désigner cet ensemble de machines est "botnet"). Un botnet peut regrouper plusieurs milliers de machines, dites machines zombies, qui sont infectées par un programme néfaste installé sur la machine à l'insu d'un utilisateur légitime. Le programme néfaste permet à l'utilisateur malveillant de commander les machines du botnet depuis une machine de contrôle. Un botnet est utilisé par exemple pour perpétrer des actions malveillantes contre d'autres machines, pour faire du commerce illicite, ou pour gagner de l'argent malhonnêtement.

Les réseaux de type botnet ont évolué au fil du temps. On connaît plusieurs procédés d'identification de machines d'un botnet. Par exemple, l'article "Identifying botnets Using Anomaly Detection Techniques Applied to DNS Traffic", R.Villamarin et JC.Brustoloni, publié dans les Proceedings IEEE CCNC 2008, propose un procédé pour identifier des serveurs de commande et de contrôle d'un réseau de type botnet. Ce procédé est basé sur une analyse de requêtes "DNS" (pour "Domaine Name Service"). Un premier mode de réalisation du procédé consiste à rechercher des taux de requêtes à des noms de domaine particuliers anormalement élevés. Un deuxième mode de réalisation du procédé consiste à rechercher des requêtes récurrentes à des noms de domaines qui n'existent pas. Ces méthodes sont adaptées à des cas où tous les clients essaient d'accéder à un même serveur et font des requêtes DNS relatives à un même nom de domaine.

La demande de brevet publiée sous le n° EP1906620 divulgue une méthode pour détecter des clients compromis qui constituent un botnet. Dans un premier temps, le procédé identifie des clients suspects, par exemple des clients qui effectuent des scans de vulnérabilités, puis analyse précisément le trafic de ces clients afin d'identifier d'autres activités suspectes, comme par exemple une connexion à un serveur spécifique tel un serveur de messagerie instantanée. Dans ce cas le client est marqué comme faisant potentiellement partie d'un groupe de machines. Une analyse et un recoupement de toutes les données récoltées sur les clients suspects permet d'identifier des groupes de machines connectés à un même serveur, chacun des membres du groupe étant identifié comme faisant partie d'un botnet. Cependant le procédé s'appuie sur l'hypothèse selon laquelle tous les clients suspects d'un groupe accèdent à un même serveur et utilisent donc un même canal.

Or, les réseaux de type botnet évoluent. Ainsi, on voit actuellement apparaître des réseaux de machines zombies, constituant un botnet, qui s'organisent en réseau "P2P" (pour "peer-to-peer"). Il devient alors difficile d'identifier un canal utilisé par les machines zombies du botnet. Il en résulte que les méthodes précitées sont totalement inadaptées pour identifier les machines zombies du botnet.

Un des buts de l'invention est de remédier à des insuffisances de l'état de la technique. L'invention répond à ce besoin en proposant un procédé de caractérisation d'entités à l'origine d'au moins une variation détectée dans un trafic réseau, ledit procédé étant défini selon la revendication 1.

L'invention offre une technique permettant d'identifier l'origine de comportements dans le réseau qui provoquent de fortes variations dans le trafic réseau par rapport à un trafic, dit normal, habituellement observé.

Le procédé selon l'invention permet d'analyser les comportements réseau en n'analysant que les entêtes IP des paquets qui constituent le trafic. Le procédé identifie à travers un comportement macroscopique visiblement anormal, une liste de clients qui ont le même comportement anormal. Ainsi, les clients de la liste semblent tous avoir un comportement similaire, par exemple, une phase de réveil au cours de laquelle tous se mettent à peu près en même temps à émettre du trafic, et une phase d'endormissement au cours de laquelle tous arrêtent à peu près simultanément d'émettre du trafic.

Autant, lorsque l'on dispose du trafic global à destination d'un serveur particulier, il est aisé d'observer un comportement macroscopique déviant du comportement normal, autant il est difficile d'identifier l'origine d'un tel comportement déviant provoqué par une pluralité de machines. Le procédé selon l'invention remédie à ce problème en caractérisant toutes les machines corrélées à ce comportement déviant, c'est-à-dire ayant un comportement similaire au comportement déviant.

Dans une réalisation de l'invention, l'étape d'identification du groupe d'entités comprend :

- une étape de classement de la pluralité d'entités ($c_k$) contribuant au trafic réseau dans un ensemble ordonné, selon un ordre prédéfini de similitude de trafic ($s_k$),
- une étape de sélection de x entités consécutives dans l'ensemble ordonné afin de former ledit groupe, la valeur de similitude de trafic ($cov(C_{x \to P})$) entre le trafic cumulé attribuable aux entités restantes ($s_{x+1}, ..., s_P$) de l'ensemble ordonné et le trafic réseau étant inférieure à un seuil prédéfini.

En observant le trafic de manière macroscopique, une difficulté est d'identifier au mieux les entités responsables des variations macroscopiques dans le trafic. Afin d'identifier un groupe de x clients suspects, il est procédé à un filtrage du trafic global observé en réitérant pour une pluralité de clients une opération de suppression d'un trafic attribuable à un client. A chaque itération, c'est le trafic du client dont la covariance avec le trafic global est la plus forte qui est supprimé. L'opération de suppression d'un trafic client est réitérée jusqu'à obtenir une covariance entre le trafic filtré et le trafic global inférieure à un seuil prédéfini. Ainsi, pour chacune des P entités qui contribuent au trafic global, il est calculé la covariance du trafic de l'entité avec le trafic global, les entités $s_1$, ..., $s_P$ étant alors classées par covariances décroissantes. Il est également défini une covariance cumulée, $\text{cov}(C_{u \to v})$, avec u < v, comme étant la covariance entre le trafic généré par les clients s d'indices compris entre u et v, et le trafic global. Le procédé identifie ensuite le nombre x de clients les plus impliqués dans la variation macroscopique du trafic global en identifiant l'indice x de l'entité à partir de laquelle la covariance cumulée $\text{cov}(C_{x \to P}) \leq 0$. Le trafic des entités d'indice x à P ne présentant plus de corrélation avec le trafic global, alors les x entités d'indices 1 à x sont celles qui présentent la plus forte corrélation avec le trafic global.

Dans une réalisation de l'invention, l'étape de détermination d'une période d'analyse adéquate comprend :

- une étape de sélection d'une plage de (m) tranches horaires passées consécutives,
- si le nombre de tranches suspectes dans ladite plage est inférieur à un taux (p) prédéfini, alors une sélection d'une nouvelle plage comprenant les (m-1) tranches horaires passées les plus récentes, et
- si le nombre de tranches suspectes dans ladite plage est supérieur ou égal audit taux, alors la période d'analyse adéquate est égale à ladite plage.

De façon avantageuse, le procédé permet de déterminer une période d'analyse adéquate optimale.

Avec le procédé selon l'invention, l'entité ($c_k$) qui contribue au trafic global est identifiée au moyen d'un critère (c), ledit critère étant un champ d'un paquet IP émis par ladite entité appartenant au groupe comprenant : adresse IP source, port source, requête DNS.

Plusieurs critères sont utilisés afin de caractériser des variations macroscopiques dans un trafic réseau. Typiquement, tout champ d'un paquet IP peut être utilisé. Le procédé selon l'invention retient cependant quelques champs pertinents. Ainsi, l'adresse IP source, utilisée comme critère par le procédé selon l'invention, permet d'identifier toutes les machines à l'origine de variations macroscopiques dans le trafic. En cas d'attaque massive d'un serveur dont le trafic est observé par une pluralité de machines organisées en botnet, alors le procédé selon l'invention permet d'identifier les machines qui constituent ce réseau de machine zombies.

Outre l'identification de machines à l'origine de variations macroscopiques dans le réseau, le procédé est adapté pour expliquer l'origine des variations macroscopiques. Ainsi, un critère possible correspond à une question contenue dans une requête DNS. En utilisant ce critère, il est alors possible d'identifier une panne d'un serveur associé à un nom de domaine spécifique. En effet, si les machines sont enregistrées auprès de ce serveur, une panne du serveur va entraîner un réenregistrement de ces machines auprès du serveur. Pour ce faire, les machines précédemment enregistrées, vont émettre des requêtes DNS auprès des serveurs DNS pour récupérer l'adresse IP du serveur auprès duquel elles souhaitent se réenregistrer. Ces émissions simultanées de requêtes DNS provoquent une variation macroscopique visible du trafic de requêtes DNS.

Un autre critère intéressant retenu par le procédé selon l'invention est le port source. En cas d'attaque par déni de service, ce champ peut permettre d'identifier une signature d'attaque. En effet, lors d'attaque massive automatisée, consistant à envoyer un très grand nombre de requêtes vers un même serveur il est rare que tous les champs des paquets IP envoyés de manière automatique soient aléatoires. Le port source fait partie de ces champs souvent non rendus aléatoires.

L'invention concerne aussi un dispositif de caractérisation de trafic adapté pour caractériser des entités à l'origine d'au moins une variation détectée dans un trafic réseau, au moins une variation supérieure à une valeur prédéterminée étant détectée dans ledit trafic, ledit dispositif étant défini selon la revendication 5.

L'invention porte également sur un programme d'ordinateur sur un support de données et chargeable dans la mémoire interne d'un ordinateur, le programme comprenant des portions de code pour l'exécution des étapes du procédé selon l'invention, lorsque le programme est exécuté sur ledit ordinateur.

L'invention concerne aussi un support de données sur lequel est enregistré le programme d'ordinateur selon l'invention.

D'autres caractéristiques et avantages de la présente invention seront mieux compris de la description et des dessins annexés parmi lesquels :

- la figure 1 représente les étapes du procédé de caractérisation d'entités à l'origine de variations dans un trafic réseau, selon un mode particulier de réalisation de l'invention ;
- la figure 2 représente un exemple de réalisation détaillé des étapes d'observation continue du trafic et de détermination d'une période d'analyse adéquate du procédé de caractérisation d'entités selon la figure 1.

- la figure 3 est un graphique de trafic réseau observé présentant des variations importantes, et qui peut faire l'objet d'une analyse selon le procédé de l'invention ;
- les figures 4a, 4b et 4c sont des graphiques présentant des trafics de client dont la covariance avec le trafic total est représentative ;
- la figure 5 est un exemple d'architecture réseau mettant en oeuvre le procédé selon l'invention.

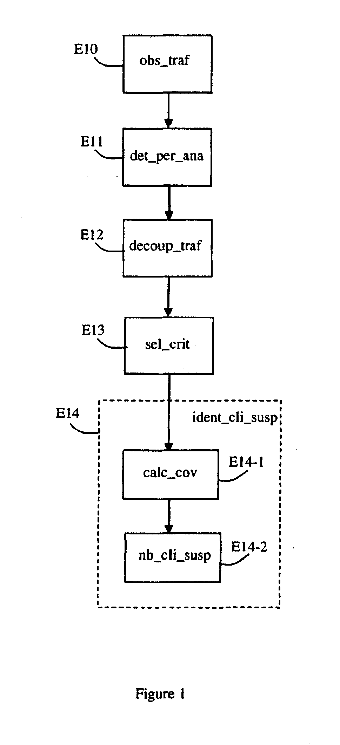

Les étapes du procédé de caractérisation d'entités à l'origine de variations significatives par rapport à un trafic habituellement observé dans un trafic réseau selon un exemple de réalisation de l'invention vont maintenant être décrites en relation avec la figure 1.

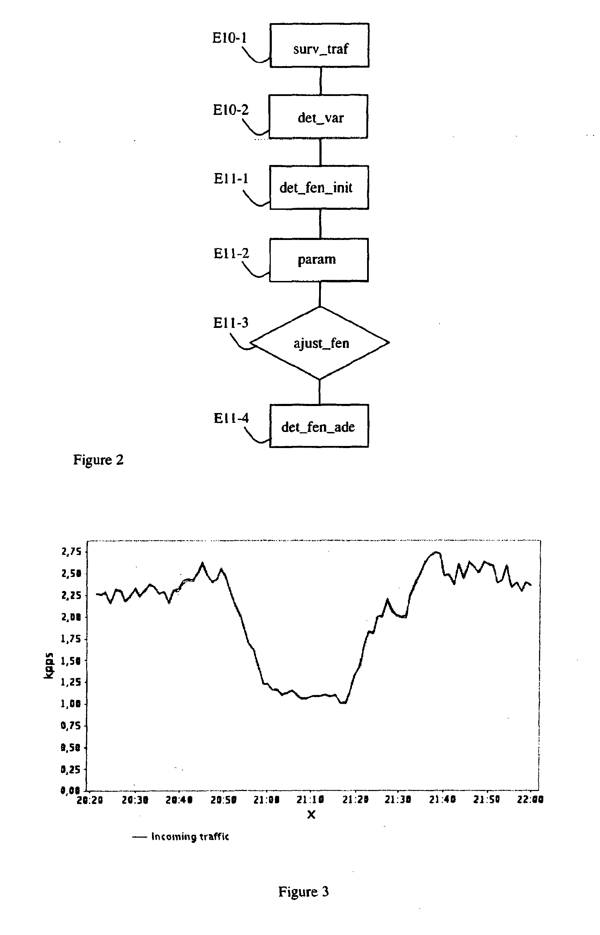

Dans une étape initiale E10 d'observation continue d'un trafic réseau global vers un serveur non représenté, il est identifié parmi N_max tranches horaires de durée T correspondant à une période d'observation initiale du trafic, n_susp tranches horaires de durée T suspectes pendant lesquelles des variations comportementales macroscopiques du trafic global sont observées. Un exemple de telles variations est illustré par la courbe selon la figure 3. Le trafic global correspond au trafic entrant pour ce serveur, c'est-à-dire le trafic reçu par ce serveur en provenance d'une pluralité de sources.

Dans l'exemple de réalisation décrit ici, l'identification de n_susp tranches horaires suspectes consiste à identifier une forte variation de trafic entre deux tranches horaires successives $T_{i-1}$ et $T_i$ de durée T, qui dépasse une valeur prédéfinie. La variation correspond aussi bien à une augmentation de trafic qu'à une diminution. Dans ce cas, les tranches horaires $T_{i-1}$ et $T_i$ sont étiquetées comme suspectes.

En fin d'étape E10, et suite à l'identification de n_susp tranches horaires suspectes parmi N_max tranches horaires d'observation initiale du trafic global à destination du serveur, il convient d'effectuer une analyse précise du trafic pour analyser les origines des variations macroscopiques observées dans le trafic global.

Dans une étape E11 de détermination d'une période d'analyse adéquate, il est déterminé une période d'analyse adéquate et le trafic correspondant à cette période. La période d'analyse adéquate est en général plus petite que la période d'observation initiale et plus riche en informations relativement aux variations de trafic, pour permettre une analyse précise de la variation macroscopique de trafic. A cette fin, la période d'analyse adéquate est évaluée comme étant un nombre m de tranches horaires successives de durée T parmi les N_max tranches horaires d'observation initiale qui comprend au moins un taux p de tranches suspectes. Le taux p utilisé permet de spécifier un poids plus important aux tranches suspectes. Habituellement, le taux p de tranches suspectes est compris entre 30% et 70%. Par exemple, un taux de 50% permet d'obtenir une période d'analyse adéquate comprenant au moins 50% de tranches horaires suspectes.

Une variante de réalisation des étapes E10 d'observation continue, et E11 de détermination d'une période d'analyse adéquate sera décrite plus loin en relation avec la figure 2.

Une fois la période d'analyse adéquate déterminée, il est procédé, dans une étape E12 de découpage, à un découpage du trafic global observé pendant la période d'analyse adéquate en n tranches horaires d'analyse de durée t. La durée t est différente de la durée T des tranches horaires d'observation initiale et en général plus petite que T afin de disposer d'un grand nombre d'informations. Plus le nombre n de tranches horaires d'analyse t est important, plus on aura d'informations par tranche t de temps, cependant plus lourde sera l'analyse. Par exemple, on peut découper la période d'analyse adéquate en 100 tranches horaires d'analyse.

Dans une étape E13 de choix de critère, il est sélectionné un critère c pour effectuer l'analyse afin d'expliquer la variation détectée dans le trafic réseau. Le critère c est un champ parmi les champs d'un paquet IP du trafic réseau. Dans l'exemple de réalisation décrit ici, le critère c d'analyse est l'adresse IP source des paquets observés dans le trafic global. La valeur $c_k$ du critère c représente l'adresse IP du client k, utilisée comme adresse IP source dans les paquets émis par le client k. Le client k peut ainsi être identifié par la valeur $c_k$ du critère c. D'autres exemples de critères sont présentés plus loin.

On remarque que l'étape E13 de sélection d'un critère est indépendante des étapes précédentes E11 et E12 et peut être réalisée préalablement à l'étape E12, ou à l'étape E11.

Dans une étape E14 d'identification de clients suspects, il est identifié un ensemble de x clients suspects impliqués dans la variation détectée dans le trafic parmi P clients participant au trafic global dont le comportement est fortement corrélé au comportement macroscopique observé.

A cette fin, dans une sous-étape E14-1 d'évaluation d'une similitude de trafic entre un trafic attribuable à une entité et le trafic réseau, il est calculé pour chaque client k participant au trafic global, $1 \leq k \leq P$, et identifié par une valeur $c_k$ du critère c, une covariance cov($c_k$) selon la formule suivante :

$$\mathrm{cov}(c_k) = \sum_{i=1}^{n} (r_{c_k,i} - r_{c_k}^0) * (R_i - R^0),$$

où

$r_{c_k,i}$ représente le nombre de paquets répondant au critère $c_k$ et observés dans le trafic global pendant la tranche horaire i de durée t. $r_{c_k,i}$ est donc le nombre de paquets d'adresse IP source $c_k$ observés dans le trafic global pendant la tranche horaire d'analyse i.

$r^0_{c_k}$ représente la moyenne du nombre de paquets répondant au critère $c_k$ pendant la période d'analyse adéquate constituée des n tranches horaires d'analyse, et est calculé comme suit :

$$r^0_{c_k} = \frac{1}{m+1} \sum_{i=1}^{n} r_{c_k,i} \, ,$$

$R_i$ représente le volume de trafic, en termes de nombre de paquets, tous clients confondus pendant la tranche horaire d'analyse i de durée t, et est calculé comme suit :

$$R_i = \sum_{k=1}^{P} r_{c_k,i}$$

$R^0$ représente la moyenne du trafic global pendant la période d'analyse adéquate et est calculé comme suit :

$$R^0 = \frac{1}{n+1} \sum_{i=1}^{n} R_i$$

Par définition, la covariance permet d'évaluer le sens de variation de deux variables et, par là, de qualifier l'indépendance de ces variables. En l'espèce, la covariance cov($c_k$) calculée pour le client k permet d'évaluer la dépendance entre le trafic issu du client k et le trafic global. Elle représente donc une similitude de trafic entre une partie du trafic, celle attribuable au client k, et le trafic réseau. Plus la covariance calculée pour le client k est positive et élevée, plus les variations observées dans le trafic issu du client k sont similaires à celles observées dans le trafic global.

Plus précisément, la covariance cov($c_k$) associée à un client k est d'autant plus grande que les écarts entre les comportements instantanés du client k par rapport à sa moyenne comportementale, et le volume total de trafic par rapport à sa moyenne sur la période d'analyse sont fréquemment dans le même sens.

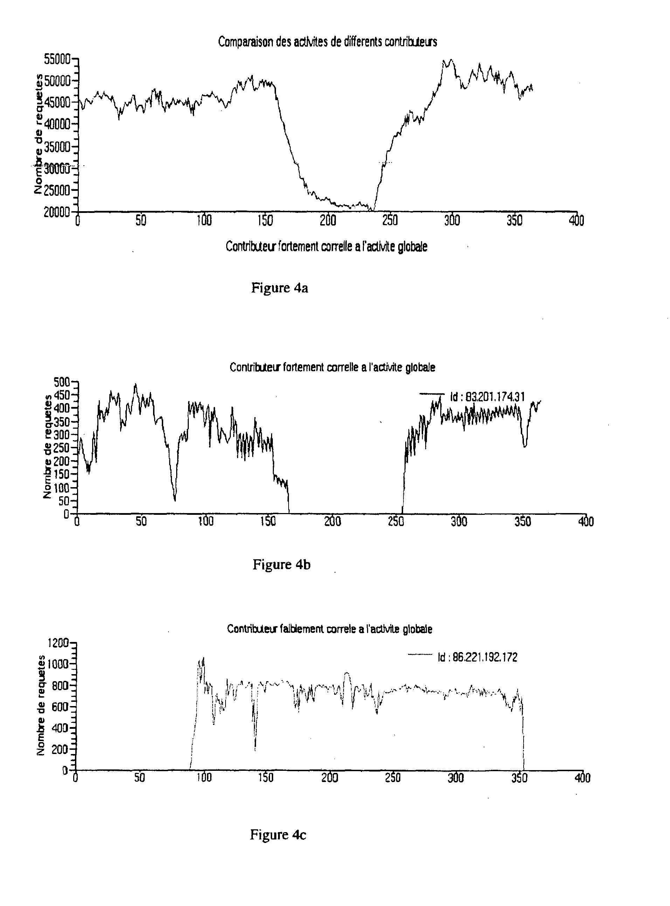

Des exemples de trafics de client dont la covariance avec le trafic total est représentative sont fournis en relation avec les figures 4a, 4b et 4c.

Dans une sous-étape E14-2 d'identification d'un groupe de x clients suspects, il est procédé à un filtrage du trafic global observé en réitérant pour une pluralité de clients une opération de suppression d'un trafic attribuable à un client. A chaque itération, c'est le trafic du client dont la covariance avec le trafic global est la plus forte qui est supprimé. L'opération de suppression d'un trafic client est réitérée jusqu'à obtenir une covariance entre le trafic filtré et le trafic global inférieure à un seuil prédéfini. Dans cet exemple de réalisation de l'invention, le seuil prédéfini est fixé à 0. L'opération de suppression est donc réitérée jusqu'à annuler la covariance. On identifie ainsi x clients concernés par ces suppressions successives. Ces clients sont identifiés comme les x clients suspects parmi les P clients qui participent au trafic global observé. Le principe de la sous-étape E14-2 est donc de supprimer dans le trafic global le trafic des x clients les plus suspects jusqu'à obtenir un trafic filtré exempt de variations visibles, un problème étant de distinguer les x clients suspects de ceux qui ne le sont pas dans un trafic global.

A cette fin, on définit un ensemble ordonné, noté $C_{1 \to P}$ de clients d'indices respectifs allant de 1 à P. Dans cet exemple de réalisation, l'ensemble de clients est ordonné selon un ordre décroissant de covariance, chaque client étant identifié par sa valeur de critère c, c'est-à-dire en l'espèce par son adresse IP. On note cet ensemble $C_{1 \to P} = \{s_1, s_2, ..., s_P\}$, $s_1$ représentant le client générant un trafic client ayant la plus forte covariance avec le trafic global, et $s_P$ le client générant un trafic client ayant la covariance la plus faible avec le trafic global. On remarque que pour tout client d'indice j, représenté par l'élément $s_j$, avec $1 \le j \le P$, il existe une valeur $c_i$ du critère c, correspondant ici à l'adresse IP de ce client d'indice j, avec $1 \le i \le P$, tel que $s_j = c_i$.

On définit une covariance cumulée, cov($C_{u \to v}$), avec u < v, comme étant la covariance entre le trafic généré par les clients d'indices compris entre u et v, et le trafic global. Plus précisément,

$$\mathrm{cov}(C_{u\to v}) = \sum_{i=1}^{n}(\sum_{k=u}^{v}(r_{s_k,i} - r_{s_k}^{0})) * (R_i - R^{0}) = \sum_{k=u}^{v}(\sum_{i=1}^{n}(r_{s_k,i} - r_{s_k}^{0}) * (R_i - R^{0}))$$

$$= \sum_{k=u}^{v}\mathrm{cov}(s_k)$$

On remarque que cov($C_{1\to P}$) représente la covariance du trafic global avec lui-même.

L'objectif est donc de déterminer le nombre x de clients les plus impliqués dans la variation détectée dans le trafic global et donc le nombre x de clients, tel que :

$$\mathrm{cov}(C_{x+1\to P}) \le 0.$$

Les x clients, notés $s_1$ à $s_x$, sont ceux générant un trafic cumulé qui présente la plus forte corrélation avec le trafic global.

Dans un autre exemple de réalisation de l'invention, l'identification des n-susp tranches horaires suspectes effectuée à l'étape initiale E10 d'observation du trafic consiste à comparer le trafic global observé à un trafic moyen, évalué consécutivement à un apprentissage préalable sur une période de temps déterminée. En général, la période de temps d'apprentissage correspond à plusieurs jours consécutifs, permettant ainsi d'observer des variations habituelles à certains moments de la journée, ou certains jours de la semaine. Des déviations du trafic global observé supérieures à une valeur prédéterminée par rapport au trafic moyen permettent d'étiqueter des tranches horaires comme suspectes.

Dans un autre exemple de réalisation de l'invention, un autre critère que l'adresse IP est retenu pour effectuer l'analyse afin d'expliquer la variation macroscopique de trafic. Ainsi, dans l'étape E13 de sélection d'un critère, un critère sélectionné est le champ correspondant à la requête "DNS" émise (pour "Domain Name Service"), par exemple "www.monsite.com". Dans cet exemple, l'analyse permet de déceler qu'une panne d'un ou de plusieurs serveurs spécifiques est à l'origine de la variation macroscopique de trafic. Dans un autre exemple de réalisation de l'invention, le critère est le port source du paquet IP. Dans cet exemple, l'analyse permet d'identifier un point commun entre les paquets participant à la variation macroscopique. Ce point commun est un indice qui peut être assimilé à une signature dans un cas d'attaque. Ainsi le procédé selon l'invention va identifier des entités, identifiées par leur adresse IP, leur port source, la requête DNS, selon le critère choisi.

Une réalisation alternative des étapes E10 d'observation continue du trafic, et E11 de détermination d'une période d'analyse adéquate va maintenant être décrite en relation avec la figure 2.

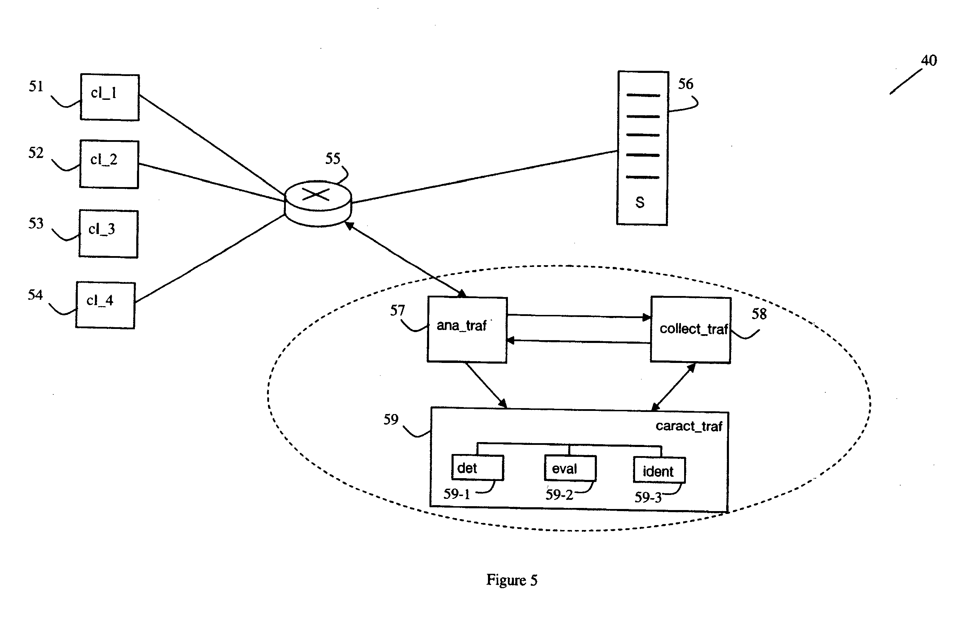

Dans une étape initiale E10-1 de surveillance, il est observé pendant une tranche unitaire courante de durée T, le trafic à destination d'un serveur 56 selon la figure 5.

Dans une étape E10-2 de détection, il est détecté une forte variation du trafic entre la tranche unitaire courante de durée T et la tranche unitaire précédente. La variation correspond soit à une augmentation brutale, soit à une diminution brutale du trafic à destination du serveur.

Dans une étape E11-1 de détermination d'une fenêtre initiale d'analyse, il est déterminé une fenêtre initiale d'étude du trafic observé comprenant la tranche unitaire courante ainsi que les N_max-1 tranches horaires de durée T précédentes. Le trafic global observé pendant la fenêtre initiale d'étude est fourni par le collecteur de trafic 58 selon la figure 5. La fenêtre initiale d'étude, de durée N_Max tranches horaires de durée T représente par exemple le trafic observé pendant une durée de 24 heures.

Dans une étape E11-2 de paramétrage de la fenêtre d'analyse, il est pris en compte un facteur de pondération p précisant un taux minimum de tranches suspectes que l'on souhaite trouver dans la fenêtre d'analyse. Par exemple, un taux de 50 % de tranches suspectes est souhaité. Puis il est évalué le nombre de tranches suspectes de trafic observé pendant la fenêtre initiale d'étude de durée N_max tranches horaires.

Dans une étape E11-3 d'ajustement de la taille de la fenêtre, tant que le taux de tranches suspectes dans la fenêtre d'analyse courante est inférieur au taux souhaité correspondant au facteur de pondération p, alors la taille de la fenêtre d'analyse courante est décrémentée de 1 en termes de nombre de tranches horaires, la tranche horaire la plus ancienne étant la tranche qui est enlevée avant de ré-exécuter l'étape E11-3 d'ajustement de la taille de la fenêtre.

Dans une étape E11-4 finale, la fenêtre d'analyse adéquate est déterminée ; elle correspond à la fenêtre courante d'analyse obtenue après autant d'exécutions de l'étape E11-3 d'ajustement que nécessaire. Elle est constituée de m tranches horaires passées et comprend un taux d'au moins p tranches suspectes de durée T.

De façon avantageuse, la détermination de la fenêtre d'analyse adéquate permet d'ajuster au mieux le trafic à analyser. Ainsi, la fenêtre d'analyse adéquate peut comprendre plusieurs variations macroscopiques de trafic successives faisant apparaître, dans un premier temps une variation positive du trafic observé, puis dans un deuxième temps une variation négative du trafic. La variation positive indique une augmentation massive de trafic, pouvant être associé à un envoi massif de requêtes depuis un ensemble de machines, et la variation négative une diminution massive, signe d'un arrêt simultané des envois de requêtes. Une telle observation est révélatrice d'une attaque, et la période d'analyse adéquate comprend au moins la variation positive et la variation négative du trafic. Dans un autre cas de figure où des variations ponctuelles et régulières, par exemple journalières, sont observées, une période d'analyse adéquate de plusieurs jours, voire une semaine est adaptée.

La figure 3 est une courbe illustrant un trafic observé à destination d'un serveur non représenté. Sur la courbe selon la figure 3, on observe qu'entre 20h50 et 21h00, le trafic observé a chuté brutalement. De même, il a cru brutalement un peu avant 21 h20, jusque vers 21 h40.

Des exemples illustrant des trafics de contributeurs dont la covariance avec le trafic total est représentative vont maintenant être décrits en relation avec les figures 4a, 4b et 4c.

La figure 4a est une courbe représentant le trafic total à destination d'un serveur non représenté pour laquelle il a déjà été procédé à un découpage selon une période d'analyse adéquate. La période d'analyse a été découpée ici en 400 tranches. On remarque des variations macroscopiques importantes du trafic dans les tranches comprises entre 150 et 200, et entre 240 et 300.

La figure 4b est une courbe représentant le trafic d'un client dont la covariance avec le trafic total est forte. La covariance calculée pour ce client est positive. On remarque une similitude du comportement du client avec le trafic global : le client cesse d'émettre des paquets dans une tranche proche de 150, et réémet de nouveau des paquets dans une tranche proche de 250.

Enfin, la figure 4c est une courbe représentant le trafic d'un client dont la covariance avec le trafic est faible. La covariance calculée pour ce client est négative. On remarque un comportement complètement différent par rapport au trafic global : le client émet en continu des paquets entre les tranches 100 et 350.

Un exemple d'architecture réseau dans lequel est implanté un serveur apte à mettre en oeuvre le procédé selon l'invention va maintenant être décrit en relation avec la figure 5.

Dans un réseau 50, par exemple, le réseau Internet, une pluralité de clients 51, 52, 53, 54 dont seulement quatre sont représentés sur la figure 5 émettent un trafic constitué de paquets IP vers un serveur S 56. Le trafic à destination du serveur 56 transite par un équipement réseau 55, par exemple un routeur, proche géographiquement du serveur 56. Le routeur 55 voit transiter le trafic global à destination du serveur 56.

Un détecteur 57 d'anomalies dans un trafic réseau est adapté pour superviser tout le trafic qui transite par le routeur 55 par un mécanisme de reflet (le terme couramment utilisé est le terme anglais "mirroring"), pour transmettre à un collecteur de trafic 58 la totalité du trafic supervisé et pour détecter une anomalie dans le trafic à destination du serveur 56. L'anomalie correspond à une variation du trafic en termes de nombre de paquets, supérieure à une valeur déterminée. Le détecteur 57 d'anomalies dans un trafic est en outre adapté pour informer un dispositif 59 de caractérisation de trafic selon un mode de réalisation particulier de l'invention de la détection d'une anomalie dans le trafic observé.

Le collecteur de trafic 58 est adapté pour stocker dans une mémoire non représentée, un ou plusieurs journaux (le terme couramment utilisé est le terme anglais "log") contenant toute information pertinente relativement au trafic observé, comme les paquets IP qui constituent le trafic, des estampilles temporelles desdits paquets.

Dans la réalisation de l'invention décrite ici, le dispositif 59 de caractérisation de trafic est un serveur informatique qui comprend des modules classiques comme :

- des interfaces réseau (non représentées) adaptées pour communiquer avec le détecteur 57 d'anomalies dans un trafic, le collecteur de trafic 58 ;
- une interface homme-machine (non représentée), telle une console, adaptée pour présenter à un opérateur humain des résultats d'une caractérisation d'entités à l'origine de variations macroscopiques dans un réseau, selon l'invention ;
- un microprocesseur (non représenté), ou "CPU" qui est une unité de traitement ;
- une mémoire de traitement (non représentée) adaptée pour effectuer des calculs, charger des instructions logicielles correspondant aux étapes du procédé de caractérisation selon l'invention décrit précédemment, et pour les faire exécuter par le microprocesseur ;

Pour la mise en oeuvre du procédé selon l'invention, le dispositif 59 de caractérisation de trafic comprend en outre les modules suivants :

- un module 59-1 de détermination d'une période d'analyse adéquate, ladite période comprenant au moins la tranche horaire suspecte correspondant à la variation détectée dans le trafic par le détecteur 57 d'anomalies dans un trafic,
- un module d'évaluation 59-2, agencé pour évaluer pour chaque entité $c_k$, $1 \leq k \leq P$, contribuant au trafic réseau, une similitude de trafic entre une partie du trafic attribuable à ladite entité et le trafic global. Dans l'exemple de réalisation décrit ici le module d'évaluation évalue une covariance $cov(c_k)$ entre la partie du trafic associée à ladite entité et le trafic réseau pendant la période d'analyse adéquate, et

- un module d'identification 59-3, adapté pour identifier parmi la pluralité d'entités contribuant au trafic réseau, un groupe d'entités responsables de la variation détectée dans le réseau, à partir des valeurs de similitude de trafic évaluées par le module d'évaluation 59-2. A cette fin, le module d'identification 59-3 est agencé pour classer la pluralité d'entités ($c_k$) contribuant au trafic réseau dans un ensemble ordonné, selon un ordre prédéfini de similitude de trafic ($s_k$), et pour sélectionner x entités consécutives dans l'ensemble ordonné afin de former ledit groupe, la valeur de similitude de trafic ($cov(C_{x \to P})$) entre le trafic cumulé attribuable aux entités restantes ($s_{x+1}$, ..., $s_P$) de l'ensemble ordonné et le trafic réseau étant inférieure à un seuil prédéfini. Dans cet exemple de réalisation de l'invention, le seuil prédéfini est fixé à 0.

Les modules décrits précédemment sont reliés au microprocesseur par l'intermédiaire d'un bus de communication.

Les modules 59-1, 59-2 et 59-3 sont agencés pour mettre en oeuvre les étapes du procédé de caractérisation selon l'invention décrit précédemment. Il s'agit de préférence de modules logiciels comprenant des instructions logicielles pour faire exécuter les étapes du procédé d'évaluation selon l'invention.

L'invention concerne donc aussi :

- un programme d'ordinateur comportant des instructions pour la mise en oeuvre du procédé de caractérisation d'entités à l'origine de variations macroscopiques dans le trafic tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

**Revendications**

1. Procédé de caractérisation d'entités à l'origine d'au moins une variation détectée dans un trafic réseau, le procédé comprenant:

   - une étape (E11) de détermination d'une période d'analyse adéquate comprenant au moins une tranche horaire suspecte, la tranche horaire suspecte contenant la variation détectée dans le trafic,
   - une étape (E14-1) d'évaluation, pour une entité ($c_k$) contribuant au trafic réseau, d'une valeur représentative d'une similitude de trafic entre une partie du trafic, attribuable à ladite entité et le trafic réseau pendant la période d'analyse adéquate, ladite étape d'évaluation étant réalisée pour une pluralité d'entités contribuant au trafic réseau, et
   - une étape (E14-2) d'identification, parmi la pluralité d'entités contribuant au trafic réseau, d'un groupe d'entités responsables de la variation de trafic, à partir des valeurs de similitude de trafic évaluées, ledit procédé étant **caractérisé en ce que** ladite étape d'identification comprend :

     - une opération de suppression du trafic attribuable à l'entité dont la similitude de trafic avec le trafic réseau est la plus forte, l'opération de suppression étant réitérée jusqu'à ce que la similitude de trafic entre le trafic filtré et le trafic global soit inférieure à un seuil prédéfini, le groupe d'entités comprenant les entités dont le trafic a été filtré.

2. Procédé selon la revendication 1 dans lequel l'étape (E14-2) d'identification du groupe d'entités comprend :

     - une étape de classement de la pluralité d'entités ($c_k$) contribuant au trafic réseau dans un ensemble ordonné, selon un ordre prédéfini de similitude de trafic ($s_k$),
     - une étape de sélection de x entités consécutives dans l'ensemble ordonné afin de former ledit groupe, la valeur de similitude de trafic ($cov(C_{x \to P})$) entre le trafic cumulé attribuable aux entités restantes ($s_{x+1}$, ..., $s_P$) de l'ensemble ordonné et le trafic réseau étant inférieure à un seuil prédéfini.

3. Procédé selon la revendication 1 dans lequel l'étape de détermination d'une période d'analyse adéquate comprend :

- une étape de sélection d'une plage de (m) tranches horaires passées consécutives,
- si le nombre de tranches suspectes dans ladite plage est inférieur à un taux (p) prédéfini, alors une sélection d'une nouvelle plage comprenant les (m-1) tranches horaires passées les plus récentes, et
- si le nombre de tranches suspectes dans ladite plage est supérieur ou égal audit taux, alors la période d'analyse adéquate est égale à ladite plage.

4. Procédé selon la revendication 1, dans lequel l'entité ($c_k$) qui contribue au trafic global est identifiée au moyen d'un critère, ledit critère étant un champ d'un paquet IP émis par ladite entité appartenant au groupe comprenant : adresse IP source, port source, requête DNS.

5. Dispositif (59) de caractérisation de trafic adapté pour caractériser des entités à l'origine d'au moins une variation détectée dans un trafic réseau, au moins une variation supérieure à une valeur prédéterminée étant détectée dans ledit trafic, ledit dispositif comprenant :

- un module (59-1) de détermination d'une période d'analyse, agencé pour déterminer une période d'analyse adéquate comprenant au moins une tranche horaire suspecte, la tranche horaire suspecte contenant la variation détectée dans le trafic,
- un module d'évaluation (59-2), agencé pour évaluer pour une entité ($c_k$) contribuant au trafic réseau, une valeur représentative d'une similitude de trafic entre une partie du trafic attribuable à ladite entité et le trafic réseau pendant la période d'analyse adéquate, ledit module étant agencé également pour réaliser l'évaluation pour une pluralité d'entités contribuant au trafic réseau, et
- un module d'identification (59-3), agencé pour identifier parmi la pluralité d'entités contribuant au trafic réseau un groupe d'entités responsables de la variation de trafic, à partir des valeurs de similitude de trafic évaluées par le module d'évaluation, ledit disposif **caractérisé en ce que** ledit module d'identification comprend des moyens de suppression de trafic, agencés pour supprimer le trafic attribuable à l'entité dont la similitude de trafic avec le trafic réseau est la plus forte, l'opération de suppression étant réitérée jusqu'à ce que la similitude de trafic entre le trafic filtré et le trafic global soit inférieure à un seuil prédéfini, le groupe d'entités comprenant les entités dont le trafic a été filtré.

6. Programme d'ordinateur sur un support de données et chargeable dans la mémoire interne d'un ordinateur, le programme comprenant des portions de code pour l'exécution des étapes du procédé selon l'une des revendications 1 à 4, lorsque le programme est exécuté sur ledit ordinateur.

7. Support de données sur lequel est enregistré le programme d'ordinateur selon la revendication 6.

**Patentansprüche**

1. Verfahren zur Kennzeichnung von Entitäten, die Ursache mindestens einer in einem Netzwerkverkehr erfassten Veränderung sind, wobei das Verfahren enthält:

- einen Schritt (E11) der Bestimmung einer zweckmäßigen Analyseperiode, die mindestens einen verdächtigen Zeitabschnitt enthält, wobei der verdächtige Zeitabschnitt die im Verkehr erfasste Veränderung enthält,
- einen Schritt (E14-1) der Ermittlung, für eine zum Netzwerkverkehr beitragende Entität ($c_k$), eines für eine Verkehrsähnlichkeit zwischen einem der Entität zuweisbaren Teil des Verkehrs und dem Netzwerkverkehr während der zweckmäßigen Analyseperiode repräsentativen Werts, wobei der Ermittlungsschritt für eine Vielzahl von zum Netzwerkverkehr beitragenden Entitäten durchgeführt wird, und
- einen Schritt (E14-2) der Identifizierung, unter der Vielzahl von zum Netzwerkverkehr beitragenden Entitäten, einer Gruppe von Entitäten, die für die Verkehrsveränderung verantwortlich sind, ausgehend von den ermittelten Verkehrsähnlichkeitswerten,
wobei das Verfahren **dadurch gekennzeichnet ist, dass** der Identifizierungsschritt enthält:
- einen Vorgang der Unterdrückung des der Entität zuweisbaren Verkehrs, dessen Verkehrsähnlichkeit mit dem Netzwerkverkehr die stärkste ist, wobei der Unterdrückungsvorgang wiederholt wird, bis die Verkehrsähnlichkeit zwischen dem gefilterten Verkehr und dem globalen Verkehr geringer als eine vordefinierte Schwelle ist, wobei die Gruppe von Entitäten die Entitäten enthält, deren Verkehr gefiltert wurde.

2. Verfahren nach Anspruch 1, wobei der Schritt (E14-2) der Identifizierung der Gruppe von Entitäten enthält:

- einen Schritt der Einordnung der Vielzahl von zum Netzwerkverkehr beitragenden Entitäten ($c_k$) in einer geordneten Einheit gemäß einer vordefinierten Reihenfolge der Verkehrsähnlichkeit ($s_k$),
- einen Schritt der Auswahl von x aufeinanderfolgenden Entitäten in der geordneten Einheit, um die Gruppe zu formen, wobei der Verkehrsähnlichkeitswert ($cov(C_{x \to P})$) zwischen dem den verbleibenden Entitäten ($S_{x+1}$, ..., $S_P$) der geordneten Einheit zuweisbaren kumulierten Verkehr und dem Netzwerkverkehr niedriger als eine vordefinierte Schwelle ist.

3. Verfahren nach Anspruch 1, wobei der Schritt der Bestimmung einer zweckmäßigen Analyseperiode enthält:

- einen Schritt der Auswahl eines Bereichs von (m) aufeinanderfolgenden vergangenen Zeitabschnitten,
- wenn die Anzahl von verdächtigen Abschnitten in dem Bereich niedriger als eine vordefinierte Rate (p) ist, dann eine Auswahl eines neuen Bereichs, der die jüngsten vergangenen Zeitabschnitte (m-1) enthält, und
- wenn die Anzahl von verdächtigen Abschnitten in dem Bereich höher als die oder gleich der Rate ist, ist die zweckmäßige Analyseperiode gleich dem Bereich.

4. Verfahren nach Anspruch 1, wobei die zum globalen Verkehr beitragende Entität ($c_k$) mittels eines Kriteriums identifiziert wird, wobei das Kriterium ein Feld eines von der Entität emittierten IP-Pakets ist, das zu der Gruppe gehört, die enthält: Source-IP-Adresse, Source-Port, DNS-Anfrage.

5. Vorrichtung (59) zur Verkehrskennzeichnung, die geeignet ist, um Entitäten zu kennzeichnen, die die Ursache mindestens einer in einem Netzwerkverkehr erfassten Veränderung sind, wobei mindestens eine Veränderung höher als ein vorbestimmter Wert im Verkehr erfasst wird, wobei die Vorrichtung enthält:

- ein Modul (59-1) zur Bestimmung einer Analyseperiode, das eingerichtet ist, um eine zweckmäßige Analyseperiode zu bestimmen, die mindestens einen verdächtigen Zeitabschnitt enthält, wobei der verdächtige Zeitabschnitt die im Verkehr erfasste Veränderung enthält,
- ein Ermittlungsmodul (59-2), das eingerichtet ist, um für eine zum Netzwerkverkehr beitragende Entität ($c_k$) einen für eine Verkehrsähnlichkeit zwischen einem der Entität zuweisbaren Teil des Verkehrs und dem Netzwerkverkehr während der zweckmäßigen Analyseperiode repräsentativen Wert zu ermitteln, wobei das Modul ebenfalls eingerichtet ist, um die Ermittlung für eine Vielzahl von zum Netzwerkverkehr beitragenden Entitäten durchzuführen, und
- ein Identifizierungsmodul (59-3), das eingerichtet ist, um unter der Vielzahl von zum Netzwerkverkehr beitragenden Entitäten eine Gruppe von Entitäten zu identifizieren, die für die Verkehrsveränderung verantwortlich sind, ausgehend von den vom Ermittlungsmodul ermittelten Verkehrsähnlichkeitswerten,

wobei die Vorrichtung **dadurch gekennzeichnet ist, dass** das Identifizierungsmodul Einrichtungen zur Verkehrsunterdrückung enthält, die eingerichtet sind, um den der Entität zuweisbaren Verkehr zu unterdrücken, dessen Verkehrsähnlichkeit mit dem Netzwerkverkehr die stärkste ist, wobei der Unterdrückungsvorgang wiederholt wird, bis die Verkehrsähnlichkeit zwischen dem gefilterten Verkehr und dem globalen Verkehr geringer als eine vordefinierte Schwelle ist, wobei die Gruppe von Entitäten die Entitäten enthält, deren Verkehr gefiltert wurde.

6. Computerprogramm auf einem Datenträger und in den internen Speicher eines Computers ladbar, wobei das Programm Codeabschnitte zur Ausführung der Schritte des Verfahrens nach einem der Ansprüche 1 bis 4 enthält, wenn das Programm in dem Computer ausgeführt wird.

7. Datenträger, auf dem das Computerprogramm nach Anspruch 6 gespeichert ist.

**Claims**

1. Method for characterizing entities at the origin of at least one detected fluctuation in a network traffic, the method comprising:

- a step (E11) of determination of an adequate period of analysis comprising at least one suspicious time slot, the suspicious time slot containing the detected fluctuation in the traffic,
- a step (E14-1) of evaluation, for an entity ($c_k$) contributing to the network traffic, of a value representative of a similarity of traffic between a part of the traffic attributable to said entity and the network traffic during the adequate period of analysis, said evaluation step being performed for a plurality of entities contributing to the network traffic, and
- a step (E14-2) of identification, among the plurality of entities contributing to the network traffic, of a group of entities responsible for the fluctuation in traffic, based on the evaluated values of similarity of traffic, said method being **characterized in that** said identification step comprises:
- an operation of removal of the traffic attributable to the entity that has the closest similarity of traffic with the network traffic, the removal operation being repeated until the similarity of traffic between the filtered traffic and the overall traffic is below a predefined threshold, the group of entities comprising the entities whose traffic has been filtered.

2. Method according to Claim 1, wherein the step (E14-2) of identification of the group of entities comprises:

- a step of classification of the plurality of entities ($c_k$) contributing to the network traffic into an ordered set, according to a predefined order of similarity of traffic ($s_k$),
- a step of selection of x consecutive entities in the ordered set in order to form said group, the value of similarity of traffic ($cov(C_{x \to P})$) between the cumulative traffic attributable to the remaining entities ($s_{x+1}, ..., S_P$) of the ordered set and the network traffic being below a predefined threshold.

3. Method according to Claim 1, wherein the step of determination of an adequate period of analysis comprises:

- a step of selection of a range of (m) consecutive elapsed time slots,
- if the number of suspicious slots in said range is below a predefined rate (p), then selection of a new range comprising the (m-1) most recent elapsed time slots, and
- if the number of suspicious slots in said range is above or equal to said rate, then the adequate period of analysis is equal to said range.

4. Method according to Claim 1, wherein the entity ($c_k$) that contributes to the overall traffic is identified by means of a criterion, said criterion being a field of an IP packet sent by said entity belonging to the group comprising: source IP address, source port, DNS request.

5. Traffic characterization device (59) suitable for characterizing entities at the origin of at least one detected fluctuation in a network traffic, at least one fluctuation above a predetermined value being detected in said traffic, said device comprising:

- a module (59-1) for determination of a period of analysis, designed to determine an adequate period of analysis comprising at least one suspicious time slot, the suspicious time slot containing the detected fluctuation in the traffic,
- an evaluation module (59-2), designed to evaluate, for an entity ($c_k$) contributing to the network traffic, a value representative of a similarity of traffic between a part of the traffic attributable to said entity and the network traffic during the adequate period of analysis, said module being also designed to perform the evaluation for a plurality of entities contributing to the network traffic, and
- an identification module (59-3), designed to identify, among the plurality of entities contributing to the network traffic, a group of entities responsible for the fluctuation in traffic, based on the values of similarity of traffic evaluated by the evaluation module, said device being **characterized in that** said identification module comprises traffic removal means, designed to remove the traffic attributable to the entity that has the closest similarity of traffic with the network traffic, the removal operation being repeated until the similarity of traffic between the filtered traffic and the overall traffic is below a predefined threshold, the group of entities comprising the entities whose traffic has been filtered.

6. Computer program on a data storage medium, the program being loadable into the internal memory of a computer, the program comprising portions of code for the execution of the steps of the method according to one of Claims 1 to 4 when the program is executed on said computer.

7. Data storage medium on which the computer program according to Claim 6 is stored.

Figure 1

EP 2 353 272 B1

E10-1 — surv_traf

E10-2 — det_var

E11-1 — det_fen_init

E11-2 — param

E11-3 — ajust_fen

E11-4 — det_fen_ade

Figure 2

X

— Incoming traffic

Figure 3

13

Figure 4a

Figure 4b

Figure 4c

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1906620 A

**Littérature non-brevet citée dans la description**

- **R.VILLAMARIN ; JC.BRUSTOLONI.** Identifying botnets Using Anomaly Detection Techniques Applied to DNS Traffic. *Proceedings IEEE CCNC,* 2008